## Europäisches Patentamt

## European Patent Office

## Office européen des brevets

(19)

(11) Veröffentlichungsnummer: **0 289 483**
**B1**

(12)

# EUROPÄISCHE PATENTSCHRIFT

(45) Veröffentlichungstag der Patentschrift:
**15.11.89**

(51) Int. Cl.⁴: **B60K 17/346**

(21) Anmeldenummer: **88890076.8**

(22) Anmeldetag: **25.03.88**

(54) **Zweistufiges Verteilergetriebe für Kraftfahrzeuge.**

(30) Priorität: **31.03.87 AT 772/87**

(43) Veröffentlichungstag der Anmeldung:
**02.11.88 Patentblatt 88/44**

(45) Bekanntmachung des Hinweises auf die Patenterteilung:
**15.11.89 Patentblatt 89/46**

(84) Benannte Vertragsstaaten:
**DE FR GB IT**

(56) Entgegenhaltungen:
**DE-A- 2 025 641**
**FR-A- 1 543 649**
**US-A- 4 188 838**
**US-A- 4 280 583**

(73) Patentinhaber: **STEYR-DAIMLER-PUCH AKTIENGESELLSCHAFT, Franz-Josefs-Kai 51, A-1010 Wien(AT)**

(72) Erfinder: **Hruska, Vladimir, Dipl.-Ing., Roseggerstrasse 18, A-4400 Steyr(AT)**

**Beschreibung**

Die Erfindung bezieht sich auf ein zweistufiges Verteilergetriebe für Kraftfahrzeuge, mit einem durch ein vorgeordnetes Schaltgetriebe erweiterten Differential, welches Schaltgetriebe aus zwei ständig in Eingriff stehenden Räderpaaren besteht, deren eine Räder als auf einer Antriebswelle lagernde und wahlweise über eine Schaltmuffe od.dgl. mit dieser kuppelbare Losräder und deren andere Räder als auf einer Zwischenwelle sitzende Feststräder ausgebildet sind, wobei eines der Feststräder mit dem Antriebsglied des Differentials kämmt.

In Kraftfahrzeugen dienen Verteilergetriebe vor allem zur Aufteilung der Motorleistung bei Vierrandantrieben auf die Vorder- und Hinterachsen, doch wäre es auch möglich, ein Verteilergetriebe einzusetzen, um neben dem Fahrzeugantrieb über eine weitere Abtriebswelle den Antrieb von Zusatzaggregaten, wie Schneefräse, Wasserpumpe u.dgl., vom Antriebsmotor abzuleiten. Dabei ist meistens ein zweistufiges Verteilergetriebe zweckmäßig, um unabhängig vom eigentlichen, dem Antriebsmotor des Fahrzeuges zugeordneten Schaltgetriebe durch ein mit einem zweigängigen Schaltgetriebe erweitertes Differential auch im Zuge des Verteilergetriebes einen schnelleren und einen langsameren Gang wählen zu können und dadurch insbesondere einen Straßengang und einen Geländegang zu ermöglichen. Der schnellere Gang bzw. der Straßengang ist der bevorzugt eingeschaltete Gang, da der langsamere Gang bzw. der Geländegang seltener, durchschnittlich nur 20 % des Gesamteinsatzes, verwendet zu werden braucht. Bisher verläuft nun der Kraftfluß zwischen Antriebswelle und Differential im Straßengang direkt über das mit dem Antriebsglied des Differentials kämmende Räderpaar des Schaltgetriebes, um für den hauptsächlich verwendeten Straßengang die in statischer Hinsicht günstigeren Belastungsverhältnisse zu bieten. Allerdings wird dabei das mit dem Antriebsglied des Differentials kämmende Festrad, das als reines Zwischenrad wirkt, einer Wechselbelastung unterworfen, die eine entsprechende Überdimensionierung dieses Zwischenrades erfordert und in Abhängigkeit von der Dimensionierung des Zwischenrades auch eine recht aufwendige, platzraubende Bauweise des gesamten Verteilergetriebes nach sich zieht. Ein weiterer Nachteil dieser Schaltanordnung besteht in den mit kleiner werdender Übersetzung steigenden dynamischen Belastungen und Schwingungsproblemen im Antriebsstrang, die durch ihr unerwünschtes Auftreten im größtenteils eingeschalteten Straßengang den Verschließ weiter beschleunigen und die Lebensdauer herabsetzen.

Der Erfindung liegt daher die Aufgabe zugrunde, diese Mängel zu beseitigen und ein zweistufiges Verteilergetriebe der eingangs geschilderten Art auf rationelle Weise so zu verbessern, daß ohne jede Beeinträchtigung der Übersetzungsmöglichkeiten und Be lastbarkeiten die Abmessungen und der Bauaufwand verringert und die Funktionstüchtigkeit gesteigert werden kann.

Die Erfindung löst diese Aufgabe dadurch, daß der Kraftfluß von der Antriebswelle zum Differential in der Schaltstellung des Schaltgetriebes für den Getriebegang mit größerer Übersetzung über das direkt mit dem Antriebsglied des Differentials kämmende Räderpaar und in der Schaltungstellung für den Getriebegang mit kleinerer Übersetzung über das freie Räderpaar, die Zwischenwelle und das mit dem Antriebsglied des Differentials kämmende Festrad des anderen Räderpaares verläuft. Für den meistens gefahrenen Straßengang kommt es durch diese dem Vorurteil der Fachwelt widersprechende Änderung der Schaltanordnung zu wesentlich verbesserten Verhältnissen bezüglich der gegenüber den statischen Belastungen entscheidenderen dynamischen Belastungen und schwingungserscheinungen, da nun im Straßengang alle Zahnräder nur mehr einer mehr oder weniger schwellenden Belastung, niemals aber einer Wechselbelastung unterworfen sind, wodurch sich die bisher erforderliche Überdimensionierung zumindest des einen Festrades und damit des gesamten Getriebes erübrigt. Darüber hinaus lassen sich auch aufgrund der möglichen größeren Übersetzungen in den Räderpaaren die schwingungsabhängigen Belastungen abbauen, was bei gleichbleibender Getriebedimensionierung eine höhere Getriebebelastung oder bei gleichbleibender Getriebebelastung eine Verringerung der Getriebeausmaße erlaubt. Die nun im Geländegang in Kauf zu nehmenden ungünstigeren Belastungsverhältnisse für das im Geländegang als Zwischenrad wirkende Festrad spielen eine untergeordnete Rolle, da der Geländegang ja nur den Bruchteil der Zeit des Straßenganges im Einsatz ist.

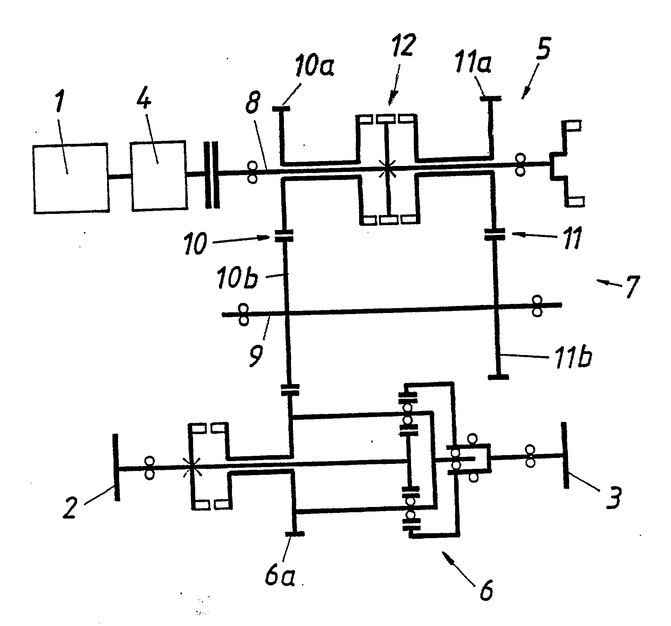

In der Zeichnung ist ein erfindungsgemäßes Verteilergetriebe anhand eines Schemas veranschaulicht.

Um die Antriebsleistung eines Motors 1 für einen Zweiachsantrieb auf die Vorderachse 2 und die Hinterachse 3 verteilen und dabei unabhängig vom Motor-Schaltgetriebe 4 zwischen einem schnelleren Straßengang und einem langsameren Geländegang wählen zu können, ist zwischen Motor 1 und Motor-Schaltgetriebe 4 einerseits und den angetriebenen Achsen 2, 3 andererseits ein zweistufiges Verteilergetriebe 5 vorgesehen, das aus einem die eigentliche Leistungsverteilung übernehmenden Differential 6 und einem die Zweigangschaltung ermöglichenden, dem Differential 6 vorgeordneten Zweigang-Schaltgetriebe 7 besteht. Dieses Zweigang-Schaltgetriebe 7 umfaßt zwei auf einer mit dem Motor 1 bzw. dem Motor-Schaltgetriebe 4 antriebsverbundenden Antriebswelle 8 und einer dazu parallelen Zwischenwelle 9 sitzende Räderpaare 10, 11, von denen die auf der Antriebswelle 8 sitzenden Räder 10a, 11a als wahlweise über eine Schaltmuffe 12 mit der Antriebswelle 8 kuppelbare Losräder ausgebildet und von denen die anderen Räder 10b, 11b als Feststräder drehfest mit der Zwischenwelle 9 verbunden sind, wobei das eine Festrad 10b mit dem Antriebsglied 6a des Differentials 6 kämmt.

In der Schaltstellung des Schaltgetriebes 7 für den Straßengang, also für den Getriebegang mit der kleineren Übersetzung, ist das Losrad 11a des freien Räderpaares 11 über die Schaltmuffe 12 mit der Antriebswelle 8 gekuppelt, so daß der Kraftfluß von der Antriebswelle 8 über das Räderpaar 11, die Zwischenwelle 9 und das Festrad 10b des anderen Räderpaares 10 zum Antriebsglied 6a des Differentials 6 verläuft. In diesem die meiste Einsatzzeit eingelegten Straßengang ergeben sich daher für die Getriebeteile ,bedingt durch das Fehlen einer Wechselbelastung,recht günstige Belastungsverhältnisse, und es treten hier im schnelleren Gang durch die Zweistufigkeit der Übersetzung auch geringere dynamische Belastungen im Antriebsstrang auf, so daß sich das Getriebe relativ klein bemessen läßt und sich dennoch durch lange Lebensdauer und hohe Belastbarkeit auszeichnet.

In der Schaltstellung des Schaltgetriebes 7 für den selten gebrauchten Geländegang, also den Getriebegang mit größerer Übersetzung, ist das Losrad 10a des anderen Räderpaares 10 über die Schaltmuffe 12 mit der Antriebswelle 8 gekuppelt und der Kraftfluß verläuft von der Antriebswelle 8 über das Räderpaar 10 direkt zum Antriebsglied 6a des Differentials 6. In diesem Fall wirkt das Festrad 10b des Räderpaares 10 lediglich als Zwischenrad und wird einerseits vom treibenden Losrad 10a angetrieben und treibt anderseits selbst das Antriebsglied 6a des Differentials 6 an, so daß es zu einer Wechselbelastung der Zähne kommt. Da der Geländegang allerdings nur wenig gebraucht wird, bleibt diese unangenehme Wechselbelastung ohne besonderen Einfluß auf die Dimensionierung u. dgl. des Festrades 10b und des ganzen Getriebes. Durch die Anordnung des Zwischenrades 10b im langsamen Gang ergeben sich aber wiederum hinsichtlich der dynamischen Belastungen und Schwingungsprobleme günstigere Bedingungen.

Aufgrund des Kraftflußverlaufes im Straßengang über die Zwischenwelle 9 und der damit verbundenen Vermeidung von Wechselbelastungen eines Zwischenrades werden auf überraschend einfache Weise die Belastungsverhältnisse des Verteilergetriebes entscheidend ver bessert und es ist bei gleichem Bauvolumen möglich, höhere Belastungen und längere Laufzeiten oder bei gleichbleibenden Belastungen kleinere Dimensionierungen des Getriebes zu erreichen.

## Patentansprüche

Zweistufiges Verteilergetriebe (5) für Kraftfahrzeuge, mit einem durch ein vorgeordnetes Schaltgetriebe (7) erweiterten Differential (6), welches Schaltgetriebe (7) aus zwei ständig in Eingriff stehenden Räderpaaren (10, 11) besteht, deren eine Räder (10a, 11a) als auf einer Antriebswelle (8) lagernde und wahlweise über eine Schaltmuffe (12) od. dgl. mit dieser kuppelbare Losräder und deren andere Räder (10b, 11b) als auf einer Zwischenwelle (9) sitzende Festräder (10b) ausgebildet sind, wobei eines der Festräder (10b) mit dem Antriebsglied (6a) des Differentials (6) kämmt, dadurch gekennzeichnet, daß der Kraftfluß von der Antriebswelle (8) zum Differential (6) in der Schaltstellung des Schaltgetriebes (7) für den Getriebegang mit größerer Übersetzung über das direkt mit dem Antriebsglied (6a) des Differentials (6) kämmende Räderpaar (10) und in der Schaltstellung für den Getriebegang mit kleinerer Übersetzung über das freie Räderpaar (11), die Zwischenwelle (9) und das mit dem Antriebsglied (6a) des Differentials (6) kämmende Festrad (10b) des anderen Räderpaares (10) verläuft.

## Claims

A two-stage transfer case (5) for motor vehicles, comprising a differential gear (6), which is supplemented by a preceding manual gearbox (7), which consists of two permanently meshing pairs of gears (10, 11), wherein one gear (10a, 11a) of each pair consists of a freely rotatable gear, which freely rotatable gears are movably mounted on a drive shaft (8) and are adapted to be selectively coupled to said shaft by a gearshift sleeve (12) or the like, whereas the other gear (10b, 11b) of each pair consists of a fixed gear (10b), which fixed gears (10b) are mounted on an intermediate shaft (9) and one of said fixed gears (10b) meshes with the input member (6a) of the differential gear (6), characterized in that when the manual gearbox (7) is in a position for the speed involving a higher transmission ratio the transmission of power from the drive shaft (8) to the differential gear (6) will be effected via the pair of gears (10) which directly mesh with the input member (6a) of the differential gear (6) whereas in the position for the cross-country speed involving a lower transmission ratio said transmission of power will be effected via the free pair of rotatable gears (11), the intermediate shaft (9) and the fixed gear (10b) of the other pair of gears (10), which fixed gear (10b) meshes with the input member (6a) of the differential gear (6).

## Revendications

Boîte de transfert (5) à deux rapports de transmission pour véhicules automobiles, avec un différentiel (6) prolongé en amont par une boîte de vitesse (7) qui comprend deux paires de pignons (10, 11) constamment en prise dans lesquelles un des pignons (10a, 11a) est un pignon fou monté sur un arbre de transmission (8) et peut lui être accouplé à volonté à l'aide d'un manchon d'accouplement (12) ou d'un moyen analogue, et dans lesquelles l'autre des pignons (10b, 11b) est calé en rotation sur un arbre intermédiaire (9), l'un de ces pignons (10b) calés en rotation engrenant avec l'élément d'entraînement (6a) du différentiel (6) caractérisé en ce que la force motrice est transmise de l'arbre de transmission (8) au différentiel (6) à l'état d'enclenchement de la boîte de vitesses (7) pour la transmission au plus fort rapport, par la paire de pignons (10) engrenant directement avec l'élément d'entraînement (6a) du différentiel (6) et à l'état d'enclenchement pour la transmission au plus faible rapport par la paire de pignons fous (11), l'arbre intermédiaire (9) et le pignon (10b) calé en rotation de l'autre paire de pignons (10) engrenant avec l'élément entraînement (6a) du différentiel (6).